# EUROPÄISCHE PATENTSCHRIFT

(11) **EP 0 846 889 B1**
(45) Veröffentlichungstag und Bekanntmachung des Hinweises auf die Patenterteilung: **13.06.2001**
(21) Anmeldenummer: 97120971.3
(22) Anmeldetag: 28.11.1997
(51) Int. Cl.: F16H 7/06, F16H 55/30

(54) **Gedämpftes Kettenrad**
Damped Sprocket
Roue à chaîne amortie

(30) Priorität: 04.12.1996 DE 29621083 U
(43) Veröffentlichungstag der Anmeldung: 10.06.1998
(73) Patentinhaber: JOH. WINKLHOFER & SÖHNE GmbH & Co KG, D-81369 München (DE)
(72) Erfinder: Schulze, Peter, 85375 Neufahrn (DE)
(74) Vertreter: Grünecker, Kinkeldey, Stockmair & Schwanhäusser Anwaltssozietät

(56) Entgegenhaltungen:
- EP-A- 0 021 839
- EP-A- 0 522 984
- DE-C- 821 303
- FR-A- 1 186 486
- FR-A- 2 325 804
- US-A- 1 808 369
- PATENT ABSTRACTS OF JAPAN vol. 7, no. 41 (M-194) [1186] , 18.Februar 1983 & JP 57 190160 A (YAMAHA), 22.November 1982,

## Beschreibung

Die Erfindung betrifft ein gedämpftes Kettenrad der im Oberbegriff des Anspruchs 1 angegebenen Art.

Es ist bekannt, die Oberflächenkontur des Dämpfkranzes symmetrisch zu profilieren und die Erhebungen exakt entweder auf die Mitten der symmetrischen Zahnlücken (JP 57190160 A) oder auf die Zahnspitzen (FR 1186486 A) auszurichten. Hierbei lassen sich die Dämpfwirkung und die Verschleißminderung nicht über eine lange Standzeit aufrechthalten. Ein Grund hierfür sind vermutlich schlagartig ablaufende, für das elastische Material der Dämpfkränze schädliche Verformungen und Umfangsversetzungen zwischen den Aufschlagpunkten der Kettenrollen im Kettenrad und den Überdeckungskontakten zwischen den Laschen und den Erhebungen des Dämpfkranzes.

Kettenräder ohne Dämpfkränze, jedoch mit asymmetrischem Zahnlückenprofil, sind aus EP 0 522 984 A und aus DE 821 303 C bekannt.

Der Erfindung liegt die Aufgabe zugrunde, ein Kettenrad der eingangs genannten Art mit verbesserter Dämpfung, reduziertem Verschleiß und langer Standzeit des Dämpfkranzes zu schaffen.

Die gestellte Aufgabe wird mit den Merkmalen des Anspruchs 1 gelöst.

Bei dieser Ausbildung stellt sich der Überdeckungskontakt zwischen jeweils einer Lasche und einer Erhebung in etwa unterhalb des Bereichs der Zahnlücke ein, in dem die Geräusche und den Verschleiß hervorrufende Energieübertragung stattfindet. Der Gipfelbereich jeder Erhebung ist unterhalb der Einlaufflanke zwischen einem ersten, durch das Krümmungszentrum des Rollbetts, und einem zweiten, durch die Zahnspitze verlaufenden Radius auf die Kettenradachse angeordnet, jedoch nicht in einem dieser Radien. Eine Umfangsversetzung zwischen dem Aufschlagimpuls der Kettenrolle und der Reaktionskraft der verformten Erhebung und der die Kettenrollen stützenden Lasche wird zwecks optimierter Dämpfung vermieden. Ferner findet keine schlagartige, sondern eine zeitlich ausgedehnte, an- und abschwellende Verformung der Erhebung statt, die zu einer unerwarteten Verlängerung der Standzeit des Dämpfkranzes führt. Diese beiden Wirkungen unterstützen einander bei der Verschleißminderung in der Verzahnung und an jedem Dämpfkranz.

Eine optimale Dämpfwirkung wird gemäß Anspruch 2 durch den relativ genau unterhalb des Aufschlagpunkts der Kettenrolle auf die Einlaufflanke positionierten Gipfelbereich der Erhebung erzielt.

Eine asymmetrische Form jeder Erhebung mit einem Walkfreiraum und einer definierten Walkrichtung ist zweckmäßig , weil die Verformung über einen durch die Verlaufskontur verlängerten Zeitraum abläuft, so dass die Verformungsarbeit für den Dämpfkranz schonend mit verminderter Leistung aufgebracht wird. Daraus resultiert eine unerwartete Steigerung der Standzeit des Dämpfkranzes. Über die erheblich verlängerte Standzeit des Dämpfkranzes sind eine hervorragende Geräuschdämpfung und geringer Verschleiß gewährleistet.

Gemäß Anspruch 4 verläuft die definierte Walkrichtung in etwa entgegengesetzt zur Kettenraddrehrichtung. Für die bezüglich der Geräuschdämpfung und der Verschleißarmut nutzbare, lange Standzeit des Dämpfkranzes ist eine von der Asymmetrie der Erhebungen des Dämpfkranzes abhängende Drehrichtung des Kettenrades wichtig, unabhängig davon, ob das Kettenrad treibt oder die Kette. Wird das Kettenrad in der "falschen" Drehrichtung gedreht, dann kann die Standzeit verkürzt sein, innerhalb deren die Dämpfwirkung bei geringem Verschleiß erzielt wird.

Die Form des Umfangs des Dämpfkranzes und die Positionierung der Erhebungen unter den Einlaufflanken sind gemäß Anspruch 5 bei spiegelbildlich symmetrischen Zahnlücken zweckmäßig, unabhängig davon, ob deren Flanken Kreisbogenabschnitten oder Evolventen folgen.

Eine besonders gute Dämpfung mit langer Standzeit des Dämpfkranzes und des Kettenrades ergibt sich gemäß Anspruch 6 durch die Kombination der Positionierung der Erhebungen unter den Einlaufflanken mit der asymmetrischen Verlaufskontur der Erhebungen und mit einer in Bezug auf die Referenzebene asymmetrischen Zahnlückenform. Bei der asymmetrischen Zahnlückenform führt die steilere Einlaufflanke zu einem geringen Aufschlagkraft- und Geschwindigkeitsimpuls und ermöglicht die flachere Auslaufflanke das rasche und frühzeitige Freikommen der Kettenrolle ohne schädliche Kontakte mit der Auslaufflanke. Der Dämpfkranz lässt sich optimal auf die durch das asymmetrische Zahnlückenprofil bereits verringerten, parasitären Kraft- bzw. Geschwindigkeitsimpulse abstimmen. Es gibt ein Zusammenspiel zwischen der Zahnlücken- und der Dämpfkranzform, derart, dass diese beiden Gestaltungsmaßnahmen jeweils für sich bereits zu einer spürbaren Geräusch- und Verschleißminderung führen und einander nicht nur additiv ergänzen, sondern sogar mit einer über eine Summierung hinausgehenden Kombinationswirkung.

Gemäß Anspruch 7 ist die Asymmetrie des Zahnlückenprofils anhand der Tangenten in den Wendepunkten der Einlauf- und Auslaufflanken darstellbar. Zweckmäßigerweise ist der Winkel zwischen der Tangente im Wendepunkt der Einlaufflanke und der Referenzebene in etwa halb so groß wie der Winkel zwischen der Tangente im Wendepunkt der Auslaufflanke und der Referenzebene. Die asymmetrische Zahnlückenform bedingt im übrigen eine bestimmte Drehrichtung des Kettenrades, unabhängig davon, ob das Kettenrad treibt oder die Kette. Es ist denkbar, das Kettenrad auch mit "falscher" Drehrichtung zu verwenden; jedoch kann dann die erzielbare Dämpfwirkung bzw. Verschleißminderung geringer sein.

Günstige Verformungsverhältnisse mit schonendem Walken der Erhebungen ergeben sich gemäß Anspruch 8. Mit einer relativ steilen oder gegebenenfalls hinterschnittenen Walkflanke lässt sich eine besonders weich einsetzende und an- und abschwellende Verformung einstellen, die der Standzeit des Dämpfkranzes zugute kommt.

Zweckmäßigerweise sind die Druckflanke und die Walkflanke gemäß Anspruch 9 auf das Zahnlückenprofil ausgerichtet.

Das Profil des Dämpfkranzes gemäß Anspruch 10 ist herstellungstechnisch einfach.

Anhand der Zeichnung werden Ausführungsformen des Erfindungsgegenstandes erläutert. Es zeigen:
- Fig. 1: in einer Teilschnittansicht einen Teil eines Kettentriebes mit einem Kettenrad und einer in das Kettenrad eingreifenden Kette, wobei in der rechten Hälfte der Fig. 1 eine Detailvariante angedeutet ist, und
- Fig.2,3,4: Eingriffsverhältnisse zwischen der Kette und dem Kettenrad der Fig. 1 in unterschiedlichen Drehstellungen des Kettenrads.

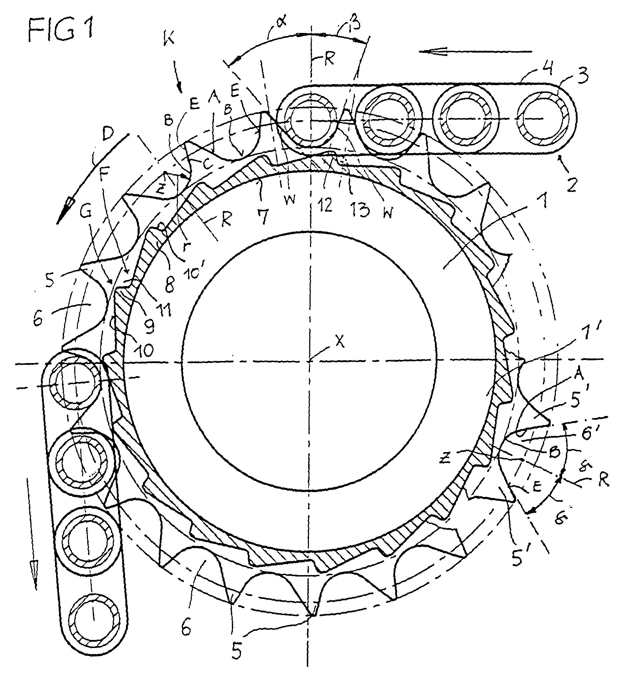

Mit einem in Fig. 1 mit festgelegter Drehrichtung D um eine Kettenradachse x drehbaren Kettenrad 1 eines Kettentriebs K steht über annähernd 90° eine Kette 2, vorzugsweise eine Rollengelenkkette, mit Kettenrollen 3 und Laschen 4 in Eingriff. Das Kettenrad 1 treibt entweder die Kette 2 oder wird von der Kette 2 angetrieben. Am Außenumfang des Kettenrads 1 sind Zähne 5 und Zahnlücken 6 angeordnet, deren jede eine Einlaufflanke E, eine Auslaufflanke A und ein die Flanken verbindendes, konkaves Rollbett B aufweist. Das Rollbett B besitzt ein geometrisch definiertes Krümmungszentrum Z des Krümmungsradius r. Zur geometrischen Definition der Zahnlückenform wird eine theoretische Referenzebene R herangezogen, die die Kettenradachse X und das Krümmungszentrum Z enthält. In Fig. 1, oben, ist jede Zahnlücke 6 zur Referenzebene R asymmetrisch. Die Einlaufflanke E ist bezüglich der Referenzebene R steiler als die Auslaufflanke A, d.h., der Flankenwinkel β ist kleiner als der Flankenwinkel α. Zweckmäßigerweise ist der Winkel α in etwa doppelt so groß wie der Winkel β. Die Flanken A, E können aus Kreisbogenabschnitten zusammengesetzt sein oder Evolventen folgen. Sofern die Flanken aus Kreisbogenabschnitten zusammengesetzt sind, existiert in jeder Flanke ein Wendepunkt W. Die jeweiligen Tangenten in den Wendepunkten W einer Zahnlücke 6 schließen mit der Referenzebene R die Winkel α, β ein. Die asymmetrische Zahnlückenform bedingt die vorbestimmte Drehrichtung D, um sicherzustellen, daß die Kettenrollen 3 auf den steileren Einlaufflanken E einlaufen.

Im Betrieb ergibt sich aus der asymmetrischen Zahnlückenform beim Eingriff der Kette 2, daß jede Kettenrolle 3 an der Einlaufflanke E in einem Aufschlagpunkt C angreift und aufgrund des kleinen Winkels β einen relativ kleinen Kraft- und Geschwindigkeitsimpuls flächennormal abgibt. Dank der Steilheit der Einlaufflanke E ist der Impuls relativ klein (geringes Aufschlaggeräusch und geringer Verschleiß). Bei der weiteren Drehung des Kettenrads 1 gelangt die Kettenrolle 3 in vollen Eingriff mit dem Rollbett R, ehe in der Auslaufzone der Kette (Fig. 1, links) die Kettenrolle 3 aus dem Rollbett B austritt. Sie löst sich dabei außerordentlich rasch und weit von der Auslauffläche A, die ja unter dem wesentlich größeren Winkel α zur Referenzebene R, d.h. wesentlich flacher, verläuft als die Einlaufflanke E. Durch das rasche Freikommen der Auslaufflanke A von der Kettenrolle 3 innerhalb eines kleinen Drehbereichs des Kettenrades 1 kommt es bei betriebsbedingten Kettenschwingungen, z.B. beeinflußt durch einen die Kette beaufschlagenden Kettenspanner, kaum mehr zu geräuschintensiven und verschleißfördernden Schlagkontakten mit der Auslaufflanke A.

Im rechten, unteren Quadranten in Fig. 1 ist eine andere Ausführungsform des Kettenrads 1' gezeigt. Dieses Kettenrad 1' weist eine bezüglich der Referenzebene R symmetrische Zahnlückenform auf, d.h., die Einlaufflanke E ist wie die Auslaufflanke A unter dem gleichen Flankenwinkel δ zur Referenzebene R geneigt. Die Winkel δ in der symmetrischen Zahnlücke 6' zwischen den Zähnen 5' können so groß wie der Winkel α der asymmetrischen Zahnlücken 6 oder größer als der Winkel α, oder auch so klein wie der Winkel β der asymmetrischen Zahnlücke 6 oder kleiner als dieser Winkel β sein (z.B. orientiert an der maximalen oder minimalen Zahnlückenform gemäß DIN).

Zur weiteren Geräuschdämpfung und Verschleißminderung ist bei beiden Ausführungsformen (Kettenrad 1 bzw. 1') an jeder Seite der Zähne 5, 5' ein Dämpfkranz 8 aus elastisch verformbarem Material (Kunststoff oder Elastomer) angeordnet, z.B. auf einer Ringschulter 7. Die Dämpfkränze 8 ziehen die Laschen 4 der Kette 2 zum Tragen mit heran, mildern die Impulse in den Aufschlagpunkten C der Einlaufflanken E, dämpfen Schwingungen der Kette 2 in der Auslaufzone und lösen die Kettenrollen 3 in der Auslaufzone rasch und weit von den Auslaufflanken, insbesondere von den flacheren Auslaufflanken A. Jeder Dämpfkranz 8 hat einen regelmäßigen sägezahnartigen Umfangsverlauf, so daß für das Kettenrad 1 bzw. 1' eine vorbestimmte Drehrichtung D einzuhalten ist, um eine optimale Dämpfung und Verschleißminderung zu erreichen.

Bei jedem Dämpfkranz 8 sind zwei wesentliche Gesichtspunkte wichtig, die einzeln eingesetzt werden könnten, zweckmäßigerweise jedoch in Kombination realisiert sind. Der erste Gesichtspunkt betrifft eine optimale Dämpfungswirkung für Aufschlagimpulse und Schwingungen der Kette in der Auslaufzone. Der zweite Gesichtspunkt erhöht die Standfestigkeit und Haltbarkeit der Dämpfkränze 8.

Die äußere Oberfläche jedes Dämpfkranzes 8 (Fig. 1) weist in einem regelmäßigen Verlauf abwechselnd Erhebungen G und Vertiefungen F auf. Jede Erhebung G besitzt einen Gipfelbereich 9, zu dem von der in Drehrichtung D vorneliegenden Vertiefung F eine flach ansteigende Druckflanke 10 verläuft. Vom Gipfelbereich 9 erstreckt sich in die in Drehrichtung D hintere Vertiefung F und in einen dort vorgesehenen Walkfreiraum 11 eine steiler abfallende Walkflanke 10'. Gegebenenfalls ist die Walkflanke 10' sogar hinterschnitten (nicht gezeigt). Zwischen jeder Lasche 4 (Unterkante der Lasche 4) und der Erhebung G findet ein Überdeckungskontakt 12 statt, der zum Verdrängen eines Teils der Masse 13 der Erhebung G mit der Drehrichtung D in etwa entgegengesetzter, definierter Walkrichtung 14 führt.

Um gemäß dem ersten Gesichtspunkt die Dämpfwirkung zu optimieren, sind die Gipfelbereiche 9 der Erhebungen G von der Achse X aus in etwa radial auf die Aufschlagpunkte C an den Einlaufflanken E ausgerichtet, und zwar unabhängig davon, ob asymmetrische Zahnlücken 6 oder symmetrische Zahnlücken 6' vorgesehen sind.

Um gemäß dem zweiten Gesichtspunkt die Standfestigkeit der Dämpfkränze 8 zu erhöhen, ist die asymmetrische Verlaufsform der Erhebungen G mit dem Walkfreiraum 11 und der definierten Walkrichtung 14 gewählt, und zwar ebenfalls unabhängig davon, ob asymmetrische Zahnlücken 6 oder symmetrische Zahnlücken 6' vorhanden sind. Dadurch läuft die Verformung innerhalb des Überdeckungskontaktes 12 nicht schlagartig, sondern allmählich und - zumindest teilweise - in den dafür vorgesehenen Walkfreiraum 11 ab.

Gemäß Fig. 1 beginnt der Überdeckungskontakt zwischen einer Lasche 4 und einer Erhebung G zweckmäßigerweise kurz bevor die mit der Lasche 4 verbundene Kettenrolle 3 im Aufschlagpunkt C die Einlaufflanke E berührt. Dadurch wird der Aufschlagimpuls gedämpft. Die allmählich verdrängte Masse 13 der Erhebung G tritt in den Walkfreiraum 11 mit der vorbestimmten Walkrichtung 14 ein. Sobald die Kettenrolle 3 voll überträgt und im Rollbett R liegt, ist der Überdeckungskontakt 12 zwischen der Unterseite der Lasche 4 und der Erhebung G maximal. Der Überdeckungskontakt 12 bleibt aufrechterhalten, bis die Kette in der Auslaufzone (Fig. 1 links) angelangt ist. Dann lösen sich die Kettenrollen 3 aus den Zahnlücken 6 (oder 6'). Die Rückstellkraft der in der Auslaufzone letzten Erhebung(en) G unterstützt das Lösen der Kette 2 vom Kettenrad 1 (bzw. 1').

Bei asymmetrischen Zahnlücken 6 wird dank der flachen Auslaufflanke A und dem Rückstelldruck der Erhebung G die Kettenrolle 3 sehr rasch von der Auslaufflanke A entfernt, so daß Schwingungen der Kette kaum mehr zu schädlichen schlagartigen Berührungen zwischen der Kettenrolle 3 und der Auslaufflanke A führen. Der bis dahin existierende Überdeckungskontakt 12 trägt zum Unterdrücken bzw. Dämpfen solcher Schwingungen bei. Das Ausmaß des maximalen Überdeckungskontaktes 12 ist zweckmäßigerweise so auf die Höhendifferenz zwischen dem Gipfelbereich 9 und dem Tal der Vertiefung F abgestimmt, daß die verdrängte Masse 13 die Lasche zwar zunehmend und entgegengesetzt zur Drehrichtung D abstützt, jedoch für die Masse 13 stets der Walkfreiraum 11 zur Verfügung bleibt.

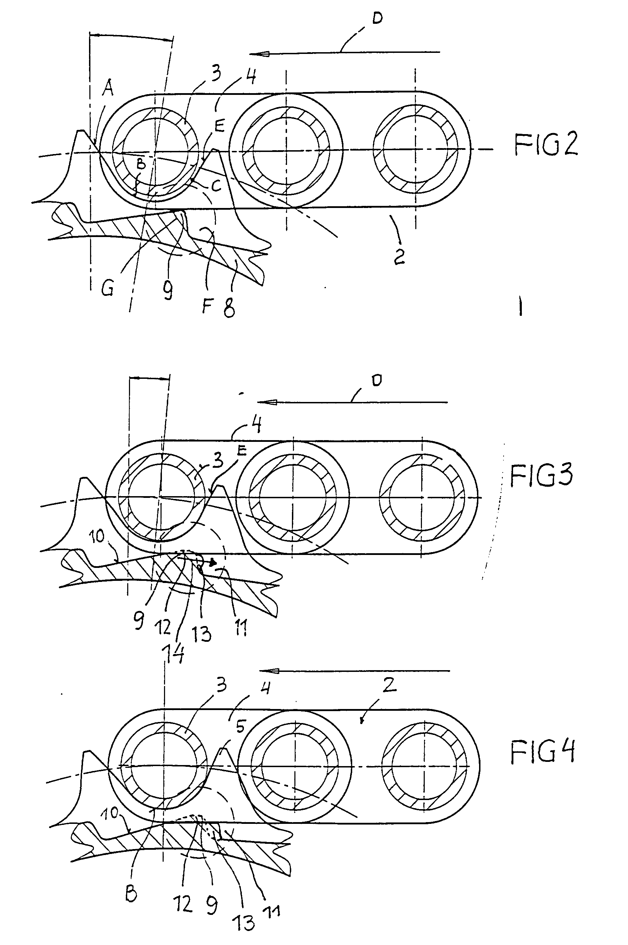

Fig. 2 verdeutlicht, wie sich in der Einlaufzone der Kette 2 die Kettenrolle 3 dem Aufschlagpunkt C an der Einlaufflanke E nähert und voreilend zum Aufschlagen der Gipfelbereich 9 gegen die Unterkante der Lasche 4 anläuft. Dies ist ein Stadium kurz vor Erreichen des in Fig. 1, oben, gezeigten Stadiums bei asymmetrischer Zahnlückenform. Dies gilt analog auch für das Kettenrad 1' mit der symmetrischen Zahnlückenform.

Fig. 3 verdeutlicht ein Stadium zwischen dem Stadium der Fig. 2 und dem Stadium der Fig. 1, in dem die Kettenrolle 3 noch nicht voll im Rollbett B angelangt ist, jedoch der Überdekkungskontakt 12 zwischen der Unterkante der Lasche 4 und dem Gipfelbereich 9 bereits zum Verdrängen der Masse 13 in den Walkfreiraum 11 geführt hat, und zwar mit definierter Walkrichtung 14 entgegengesetzt zur Drehrichtung D. Die Lasche 4 stützt sich zunehmend entgegengesetzt zur Drehrichtung D auf dem Gipfelbereich 9 ab, jedoch auch in Drehrichtung D vorne auf der Druckflanke 10.

Fig. 4 verdeutlicht das Stadium in etwa der Fig. 1, oben, in dem die Kettenrolle 3 voll im Rollbett B sitzt und in etwa der maximale Überdeckungskontakt 12 eingetreten ist. Die verdrängte Masse 13 befindet sich im Walkfreiraum 11 und stützt die Lasche 4 nun bis in etwa unterhalb der Spitze des Zahns 5 ab, während auch ein nennenswerter Teil der Druckflanke 10 mitverformt wird.

Da erfahrungsgemäß bei der weiteren Drehung des Kettehrades die Kettenrolle 3 gemäß Fig. 4 weniger oder kaum trägt und erst in der Auslaufzone der Kette nochmals zum Tragen gebracht wird, kann der Überdeckungskontakt zwischen der Lasche 4 und der Erhebung G zwischen der Einlaufzone und der Auslaufzone geringfügig variieren, ehe er beim vollständigen Freikommen der Kettenrolle 3 in der Auslaufzone aufgehoben wird, so daß sich die Erhebung G in die ursprüngliche Form zurückstellt.

Die exakte Kontur jeder Erhebung G kann von der gezeigten abweichen, sofern sichergestellt ist, daß der Gipfelbereich 9 in etwa auf den Aufschlagpunkt der Kettenrolle 3 auf der Einlaufflanke ausgerichtet ist, und auch sichergestellt ist, daß die Verformung mit definierter Walkrichtung 14 abläuft. Die Walkflanke 10' könnte etwas flacher sein als gezeigt oder noch steiler abfallen oder sogar hinterschnitten sein. Der Gipfelbereich benötigt nicht notwendigerweise eine gerundete Kontur; es könnte eine Abflachung mit tangentialer Ausrichtung oder in Schräglage vorgesehen sein, oder eine Kuppe, die zur Kettenradachse X annähernd konzentrisch gekrümmt ist. Die axialer Richtung gesehene Breite des Dämpfkranzes 8 sollte die seitliche Ausladung der Laschen 4 (Innen- und Außenlaschen) übersteigen. Sofern der Dämpfkranz 8 an der den Zähnen 5 bzw. 5' abgewandten Axialseite frei ausläuft, tritt eine gewisse Verformung auch in dieser axialen Richtung auf. Alternativ könnte der Dämpfkranz 8 in einer Umfangsnut angeordnet sein, an deren den Zähnen 5 abgewandter Nutflanke sich der Dämpfkranz 8, zumindest teilweise, in axialer Richtung abstützt. Die Härte (Shore-Härte) des Materials des Dämpfkranzes 8 wird auf den jeweiligen Anwendungsfall abgestimmt. Das Material des Dämpfkranzes 8 ist zweckmäßigerweise gegen Feuchtigkeit und/oder Schmiermittel resistent.

## Patentansprüche

1. Kettenrad (1, 1') für einen Kettentrieb mit treibendem oder/und getriebenem Kettenrad, mit einem an wenigstens einer axialen Seite des Kettenrads angeordneten Dämpfkranz (8) aus elastisch verformbarem Material, der in Umfangsrichtung abwechselnd einen Gipfelbereich aufweisende Erhebungen (G) und Vertiefungen (F) aufweist, von denen die Erhebungen (G) mit Laschen (4) der in die Zähne (5, 5') und Zahnlücken (6, 6') der jeweils eine Einlauf-, eine Auslaufflanke (E, A) und ein dazwischenliegendes Rollbett(B) aufweisenden Verzahnung eingreifenden Kette in etwa in radialen Überdeckungskontakt (12) bringbar sind, **dadurch gekennzeichnet**, daß der Gipfelbereich (9) jeder Erhebung (G) unterhalb der Einlaufflanke (E) innerhalb eines Bereichs des Kettenrads (1, 1') angeordnet ist, der zwischen einem ersten von der Kettenradachse (X) zum Krümmungszentrum (Z) des Rollbetts (B) verlaufenden Radius (R) und einem zweiten von der Kettenradachse (X) zur Spitze des Zahns (5, 5') verlaufenden Radius des Kettenrads (1, 1') liegt, wobei die ersten und zweiten Radien selbst nicht zu dem Bereich gehören.

2. Kettenrad nach Anspruch 1, dadurch gekennzeichnet, dass der Gipfelbereich (9) und Bereich des maximalen Überdeckungskontakts (12) in Bezug auf die Kettenradachse (X) in etwa radial unterhalb des Aufschlagpunkts (C) der Kettenrolle (3) auf die Einlaufflanke (E) angeordnet ist.

3. Kettenrad nach Anspruch 1, **dadurch gekennzeichnet,** dass die Erhebung (G) - in einer Ansicht in Richtung der Kettenradachse (X) - einen asymmetrischen Verlauf mit einem in Umfangsrichtung auf den Gipfelbereich (9) folgenden Walkfreiraum (11) aufweist, mit dem unter überdeckendem Kontakt (12) mit der Lasche (4) eine definierte Walkrichtung (14) des kontaktierten Gipfelbereichs (9) zum Walkfreiraum (11) einstellbar ist.

4. Kettenrad nach Anspruch 3, **dadurch gekennzeichnet,** dass der Walkfreiraum (11) in Kettenraddrehrichtung (D) hinter dem Gipfelbereich (9) liegt und dass die Walkrichtung (14) in etwa der Kettenraddrehrichtung (D) entgegengesetzt ist.

5. Kettenrad nach wenigstens einem der Ansprüche 1 bis 4, **dadurch gekennzeichnet,** dass die oberhalb der Erhebungen (G) liegenden Einlauf- und die Auslaufflanken (A, E) in jeder Zahnlücke (6') zum ersten Radius (R spiegelbildlich symmetrisch sind und Kreisbogenabschnitten oder Evolventen folgen.

6. Kettenrad nach wenigstens einem der Ansprüche 1 bis 4, **dadurch gekennzeichnet,** dass die oberhalb der Erhebungen (G) liegendenden Einlauf- und die Auslaufflanken (E, A), die Kreisbogenabschnitten oder Evolventen folgen, in jeder Zahnlücke (6) in Bezug auf den ersten Radius (R) asymmetrisch angeordnet sind, wobei, vorzugsweise, die Einlaufflanke (E) gegenüber der Auslaufflanke (A) steiler ist.

7. Kettenrad nach Anspruch 6, **dadurch gekennzeichnet,** dass Einlauf- und Auslaufflanken (E, A) jeweils einem Wendepunkt (W) aufweisen, und dass der zwischen einer Tangente im Wendepunkt der Einlaufflanke (E) und dem ersten Radius (R) eingeschlossene Winkel (β) kleiner ist als der zwischen einer Tangente im Wendepunkt der Auslaufflanke (A) und dem ersten Radius (R) eingeschlossene Winkel (α), vorzugsweise in etwa halb so groß ist wie der Winkel (α).

8. Kettenrad nach wenigstens einem der Ansprüche 1 bis 4, **dadurch gekennzeichnet,** dass die Erhebung (G) eine aus der einen Vertiefung (F) zum Gipfelbereich (9) flach ansteigende Druckflanke (10) und eine relativ zur Druckflanke (10) vom Gipfelbereich (9) steiler in den nachfolgende Walkfreiraum (11) der anderen Vertiefung (F) abfallende, gegebenenfalls hinterschnittene, Walkflanke (10') aufweist.

9. Kettenrad nach wenigstens einem der Ansprüche 1 bis 8, **dadurch gekennzeichnet,** dass - von der Kettenradachse (X) aus gesehen - die Druckflanke (10) in etwa auf das Rollbett (B) und die Walkflanke (10') in etwa auf die Einlaufflanke (E) einer Zahnlücke (6, 6') ausgerichtet ist.

10. Kettenrad nach wenigstens einem der vorhergehenden Ansprüche, **dadurch gekennzeichnet,** dass der Dämpfkranz (8) mit seinem Außenumfang ein regelmäßiges Sägezahnprofil bildet, in dem die flacheren Druckflanken (10) entgegen der Kettenraddrehrichtung (D) ansteigen.

## Claims

1. A chain wheel (1, 1') for a chain drive with a driving and/or driven chain wheel, comprising a damping rim (8) made of an elastically deformable material, which is arranged at at least one axial side of said chain wheel and which in the circumferential direction alternatively comprises elevations (G) with a peak portion and indentations (F), of which said elevations (G) can approximately be brought into radial overlap contact (12) with straps or side bars (4) of a chain engaging into teeth (5, 5') and tooth spaces (6, 6') of a toothing comprising a respective inlet and exit profile (E, A) as well as an intermediate roll bed (B), **characterized in** that the peak portion (9) of each elevation (G) is arranged below said inlet profile (E) within a portion of said chain wheel (1, 1') which is positioned between a first radius (R) extending from the chain wheel axis (X) to the center of curvature (Z) of said roll bed (B) and a second radius of said chain wheel (1, 1') extending from said chain wheel axis (X) to the tip of said tooth (5, 5'), said first and second radii as such forming no part of said portion.

2. A chain wheel according to claim 1, **characterized in** that said peak portion (9) and the area of maximum overlap contact (12) are arranged with respect to said chain wheel axis (X) approximately radially below the impact point (C) of a chain roll (3) on said entry profile (E).

3. A chain wheel according to claim 1, **characterized in** that said elevation (G), when viewed in the direction of said chain wheel axis (X), has an asymmetrical extension with a free deformation space (11) circumferentially following said peak portion (9), whereby a defined deformation direction (14) of the contacting peak portion (9) relative to the free deformation space (11) is adjustable under overlapping contact (12) with said strap (4).

4. A chain wheel according to claim 3, **characterized in** that said free deformation space (11) is positioned behind said peak portion (9) in the rotational direction (D) of said chain wheel, and that said deformation direction (14) is approximately opposite to the rotational direction (D) of said chain wheel.

5. A chain wheel according to at least one of claims 1 to 4, **characterized in** that said entry and exit profiles (A, E) positioned above said elevations (G) are symmetrical in mirror-image fashion to said first radius (R) in each tooth space (6') and follow circular-arc sections or involutes.

6. A chain wheel according to at least one of claims 1 to 4, **characterized in** that said entry and exit profiles (A, E) which are positioned above said elevations (G) and follow circular-arc sections or involutes are asymmetrically arranged in each tooth space (6) relative to said first radius (R), said entry profile (E) being preferably steeper than said exit profile (A).

7. A chain wheel according to claim 6, **characterized in** that said entry and exit profiles (E, A) are each provided with a turning point (W), and that an angle (β) which is enclosed between a tangent at the turning point of said entry profile (E) and said first radius (R) is smaller than an angle (α) which is enclosed between a tangent at the turning point of said exit profile (A) and said first radius (R), said angle (ß) preferably being about half the size of said angle (α).

8. A chain wheel according to at least one of claims 1 to 4, **characterized in** that said elevation (G) has a pressure profile (10) with a flat ascent from the one indentation (F) to said peak portion (9), and a deformation profile (10'), optionally provided with an undercut, with a steeper descent relative to said pressure profile (10) from said peak portion (9) into the subsequent free deformation space (11) of said other indentation (F).

9. A chain wheel according to at least one of claims 1 to 8, **characterized in** that, when viewed from said chain wheel axis (X), said pressure profile (10) is approximately oriented towards said roll bed (B) and said deformation profile (10') approximately towards the entry profile (E) of a tooth space (6, 6').

10. A chain wheel according to at least one of the preceding claims, **characterized in** that said damping rim (8) with its outer circumference forms a regular sawtooth profile in which the flat pressure profiles (10) ascent in a direction opposite to the rotational direction (D) of said chain wheel.

## Revendications

1. Roue à chaîne (1,1') pour un dispositif d'entraînement à chaîne comportant une roue à chaîne motrice et/ou entraînée, comprenant une couronne d'amortissement (8) disposée au moins sur un côté axial de la roue à chaîne et réalisée en un matériau déformable élastiquement, qui comporte des bossages (G) possédant une partie formant sommet et des renfoncements (F), qui alternent dans la direction circonférentielle et parmi lesquels les bossages (G) peuvent être amenés à établir approximativement un contact radial (12), avec recouvrement, avec des maillons (4) de la chaîne qui engrène avec les dents (5, 5') et les entre-dents (6, 6') de la denture qui possède respectivement un flanc d'entrée (E), un flanc de sortie (A) et un logement intercalaire (B) pour rouleau, caractérisée en ce que la partie sommitale (9) de chaque bossage (G) est disposée au-dessous du flanc d'entrée (E) à l'intérieur d'une partie de la roue à chaîne (1, 1'), qui est située entre un premier rayon (R), qui s'étend depuis l'axe (X) de la roue à chaîne en direction du centre de courbure (Z) du logement (B) pour rouleau, et un second rayon de la roue à chaîne (1, 1'), qui s'étend depuis l'axe (X) de la roue à chaîne jusqu'à la pointe de la dent (5, 5'), les premier et second rayons n'appartenant pas eux-mêmes à la partie de la roue à chaîne.

2. Roue à chaîne selon la revendication 1, caractérisée en ce que la partie sommitale (9) et la zone du contact maximum de recouvrement (12) sont disposées par rapport à l'axe (X) de la roue à chaîne approximativement radialement au-dessous du point d'impact (C) du rouleau de chaîne (3) sur le flanc d'entrée (E).

3. Roue à chaîne selon la revendication 1, caractérisée en ce que le bossage (G) possède - selon une vue dans la direction de l'axe (X) de la roue à chaîne - une allure dissymétrique avec un espace de refoulement (11) qui succède à la partie sommitale (9) dans la direction circonférentielle et au moyen de laquelle une direction de cheminement (14) de la partie sommitale (9), qui établit le contact, peut être réglée par rapport à l'espace de refoulement (11), au-dessous du contact à recouvrement (12) avec le maillon (4).

4. Roue à chaîne selon la revendication 3, caractérisée en ce que l'espace de refoulement (11) est situé en arrière de la partie sommitale (9) dans le sens de rotation (D) de la roue à chaîne et que la direction de cheminement (14) est approximativement opposée au sens de rotation (D) de la roue à chaîne.

5. Roue à chaîne selon au moins l'une des revendications 1 à 4, caractérisée en ce que les flancs d'entrée et de sortie (A, E), qui sont situés au-dessus des bossages (G), sont symétriques dans chaque entre-dents (6') par rapport au premier rayon (R) et suivent des sections d'arc de cercle ou des courbes en développante.

6. Roue à chaîne selon au moins l'une des revendications 1 à 4, caractérisée en ce que les flancs d'entrée et de sortie (A, E), qui sont situés au-dessus des bossages (G) et suivent des sections d'arc de cercle ou des courbes en développante, sont disposés dans chaque entre-dents (6) d'une manière dissymétrique par rapport au premier rayon (R), le flanc d'entrée (E) étant de préférence plus pentu que le flanc de sortie (A).

7. Roue à chaîne selon la revendication 6, caractérisée en ce que les flancs d'entrée et de sortie (E, A) possèdent chacun un point d'inflexion (W), et que l'angle (β), qui est formé entre une tangente au point d'inflexion au flanc d'entrée (E) et le premier rayon (R), est inférieur à l'angle (α) formé entre une tangente au point d'inflexion au flanc de sortie (A) et le premier rayon (R), et de préférence est égal approximativement à la moitié de l'angle (α).

8. Roue à chaîne selon au moins l'une des revendications 1 à 4, caractérisée en ce que le bossage (G) comporte un flanc de compression (10), qui remonte à plat à partir d'un renfoncement (F) en direction de la partie sommitale (9), et un flanc de cheminement (10'), qui descend d'une manière relativement plus pentue par rapport au flanc de compression (10) à partir de la partie sommitale (9), dans l'espace libre suivant de cheminement (11) de l'autre renfoncement (F), flanc de cheminement qui est éventuellement en contre-dépouille.

9. Roue à chaîne selon au moins l'une des revendications 1 à 8, caractérisée en ce que - vu à partir de l'axe (X) de la roue à chaîne - le flanc de compression (10) est orienté approximativement vers le logement (B) pour rouleau et le flanc de cheminement (10') s'étend approximativement vers le flanc d'entrée (E) dans l'entre-dents (6, 6').

10. Roue à chaîne selon au moins l'une des revendications précédentes, caractérisée en ce que la couronne d'amortissement (8) forme, au moyen de sa périphérie extérieure, un profil régulier en dents de scie, dans lequel les flancs plus plats de compression (10) remontent en sens opposé du sens de rotation (D) de la roue à chaîne.
